# EUROPEAN PATENT APPLICATION

(11) **EP 0 762 718 A2**
(43) Date of publication of application: **12.03.1997**
(21) Application number: 96113284.2
(22) Date of filing: 20.08.1996
(51) Int. Cl.: H04N 1/00

(54) **System for transmitting a video image**

(30) Priority: 25.08.1995 FI 954018
(71) Applicant: NOKIA TECHNOLOGY GmbH, 75175 Pforzheim (DE)
(72) Inventor: Nurmi, Veikko, 20320 Turku (FI)

(57) **Abstract**

The invention relates to the transmission of a still video image particularly in analog video systems. According to the invention, several still video images are transferred alternately on a first transmitter (10) to receiver (11) transmission channel (15), and at least one video image is stored in the receiver's (11) memory (113) in order to be displayed. The video image stored in the memory is selected on the basis of identifying information transferred on another transmission channel (16). The identifying information can be transferred from a transmitter to a receiver or from a receiver to a transmitter. The video image and the identifying information can also be transferred on the same transmission channel. The invention can be applied in the transfer of a video image in the form of a video signal, RGB signal or YUV signal, for example. The solution according to the invention facilitates the transfer of several still video images on one transmission channel, thereby reducing the need for transmission channels.

## Description

The invention relates to a method and circuit arrangement for transmitting a still video image from a transmitter to a receiver via a transmission path especially in analog video systems, A/D conversion and storage at the receiving end and D/A conversion for display.

Here, a still video image refers to a video image where the information of successive displayed images is substantially the same. Each such video image may comprise one or more consecutively transmitted fields. Here, a transmission path refers to a method and means of transferring information, and it may be, for example, a radio-frequency modulated carrier wave transmitted via cable or aerially. Similarly, a transmission channel means, in addition to the transmission path, also the method, such as a frequency band used for the transmission of information, with which the different image data transferred simultaneously on the same transmission path can be distinguished from each other.

A video image is usually transferred in the form of a video signal, RGB signal or YUV signal. Transfer in the form of a video signal refers to video signals according to common video standards, such as PAL (Phase Alternation Line), SECAM (Sequential couleur à memoire) and NTSC (National Television System Committee). In these methods, the luminance and colour difference signals are transferred simultaneously on separate frequency bands. The RGB signal comprises separate signals for the red (R), green (G) and blue (B) colours that can be transferred consecutively on the same channel or parallely on different channels. The YUV signal comprises the luminance signal Y and the colour difference signals U and V.
DE 25 57 394 describes a TV telephone system with transmission of still picture information over a TV or a TV telephone channel to several receivers. An identification signal is allocated to each still picture. Storing the still picture information at the receiving end for later display or processing is not specifically mentioned. GB 209 5949 describes a TV burst service for still picture transmission over a TV channel. A vertical interval code is used for frame identification.
Storage of still picture information, both at the central controller and at the users end, is done by means of video tape reproducers.

It is also known to transfer mainly text information using a so-called teletext method. In the method, text information is digitally modulated to an analog signal conveying a video image. The text information is divided into pages displayed on the screen one at a time, and with each page also the page number is transmitted. In a receiver, the page is stored in memory and it can be displayed on the screen instead of the TV picture or simultaneously with the TV picture. In the teletext method, the amount of information per image transferred is typically small since the method is intended mainly for transferring text-type information. Therefore, known teletext methods cannot be applied, at least not as such, to the transfer of a video image containing picture information.

It is also known to produce a so-called still frame of a received moving video image. Then the video image is converted in the receiver to digital form and stored in the receiver's memory. Thereafter, the video image information stored in the memory can be converted to analog form and displayed on the receiver screen. This method, however, does not reduce the need for transmission capacity because in this method, too, each transmitted program continuously requires a channel of its own.

The prior art methods described above are further disclosed in [1] Pentti O.A. Haikonen, Videotekniikka, Helsinki 1994, 202 pp.

The object of the present invention is to provide a method and a circuit arrangement with which the problems mentioned above can be solved and with which still video images can be transmitted, the requested still picture be identified and stored at the receiving end by more economic means. The method and arrangement according to the invention are characterized in that still video images intended for different receivers are transmitted alternately on the same transmission channel and the video image is stored in a digital memory and read from the memory during the display of the video image. The video image to be stored in the receiver's memory is chosen on the basis of identifying information transferred between the transmitter and the receiver.

The method according to the invention is characterized in that identifying information is transferred between the transmitter and receiver, and the video image to be stored in the receiver's memory is selected on the basis of said identifying information and that the video image is stored in a digital memory. The system according to the invention is characterized in that the system includes means for transferring identifying information between the transmitter and receiver and means for selecting a video image to be stored in memory on the basis of said identifying information. The circuit arrangement according to the invention for receiving a video image is characterized by what is expressed in the characterizing puts of claim 6. Preferred embodiments of the invention are presented in the sub-claims.

The invention is described with reference to the accompanying drawings, where
Fig. 1 shows in block diagram format the principle of a system according to the invention employing a video signal to convey a video image and identifying information transferred from a transmitter to a receiver,
Fig.2 shows in block diagram format the principle of a system according to the invention employing a video signal to convey a video image and identifying information transferred from a receiver to a transmitter,
Fig. 3 shows in block diagram format a transmitter according to the invention which uses an RGB or YUV signal to convey a video image,
Fig. 4 shows in block diagram format a receiver according to the invention which uses an RGB signal to convey a video image,
Fig. 5 shows in block diagram format a receiver according to the invention which uses a YUV signal to convey a video image, and
Fig. 6 shows the implementation of a receiver according to the invention which uses an RGB signal to convey a video image and in which the identifying information is transferred from the transmitter to the receiver in conjunction with the RGB signal.
Fig. 7 shows the implementation of a receiver according to the invention which uses an YUV signal to convey a video image and in which the identifying information is transferred from the transmitter to the receiver in conjunction with the YUV signal.

In systems according to the invention the identifying information can be transferred from the transmitter to the receiver or from the receiver to the transmitter. In addition, a system according to the invention can be applied in connection with different transmission methods.

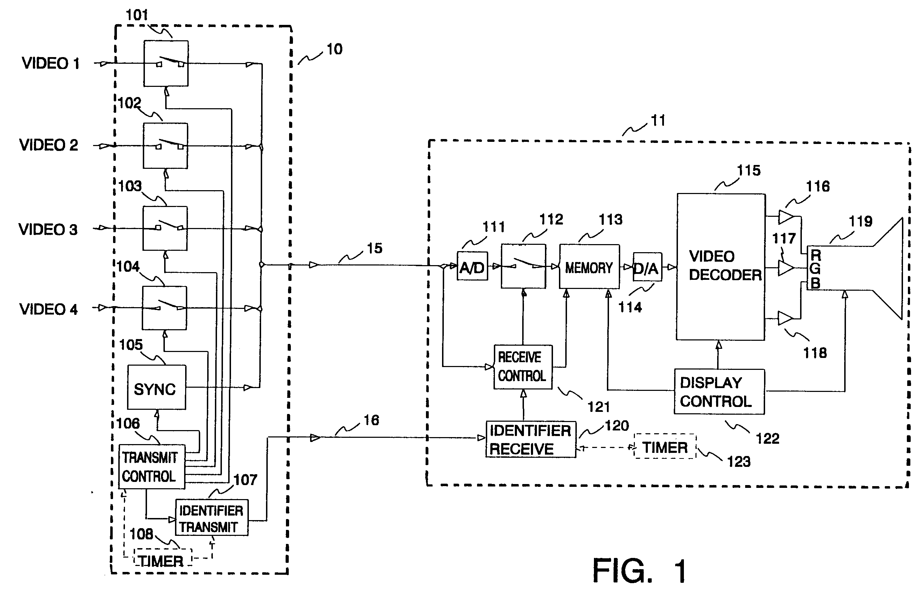

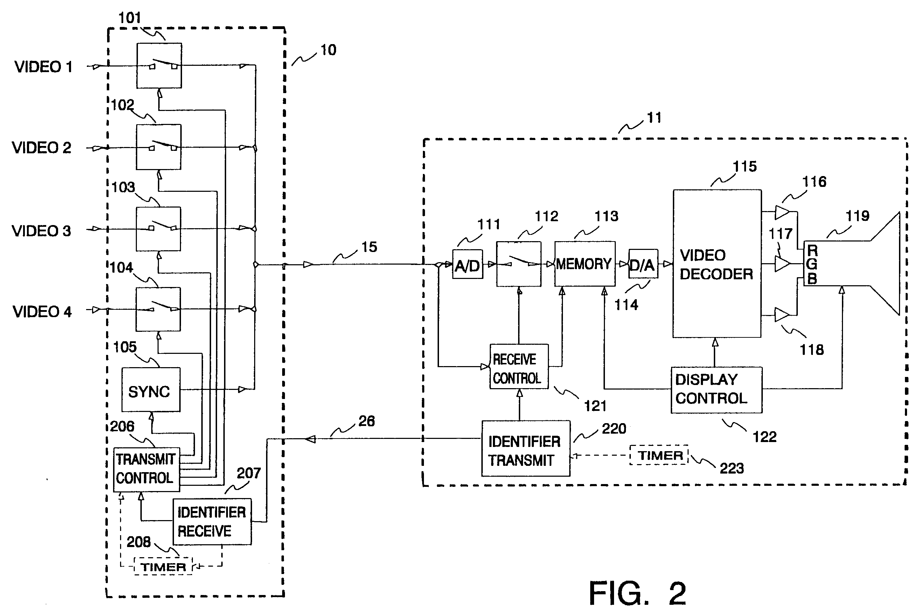

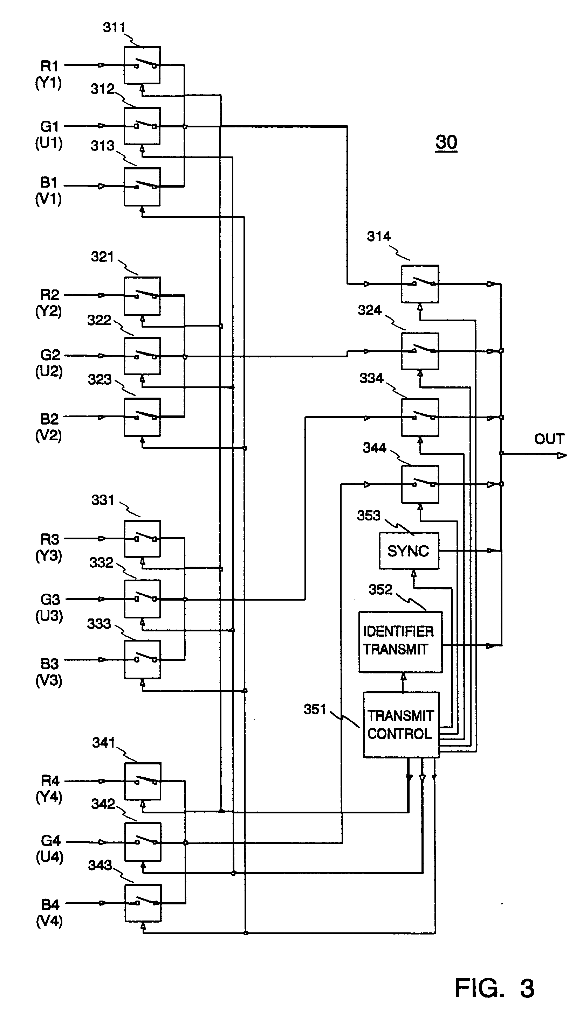

Below, the invention is disclosed by first describing some embodiments based on the transmission of a video signal; in the embodiment shown in Fig. 1 the identifying information is sent from the transmitter to the receiver, and in the embodiment shown in Fig. 2 the identifying information is sent from the receiver to the transmitter. After that, solutions based on the transmission of RGB and YUV signals are described with reference to Figs. 3, 4 and 5. In these solutions the identifying information is transferred from the transmitter to the receiver on the same transmission path as the signal carrying the video image. Finally, a more detailed description is given of an implementation of a receiver according to the invention in which a video image is transferred using an RGB signal and the identifying information is transferred from the receiver to the transmitter in connection with the RGB signal during blanking lines.

Fig. 1 shows a system according to the invention in which a video image is transferred by means of a video signal. In the system, video signals VIDEO 1 to VIDEO 4, which are ordinary video signals and contain one still video image each, are input to a transmitter 10. One of said video signals can be connected by means of switches 101, 102, 103 and 104 to a first transmission channel 15. A video transmission control unit 106 controls the switches 101-104 advantageously in a manner such that a one-field sample is selected at a time from each of the video signals and that sample is transferred via the transmission channel 15 to a receiver. In this manner, video images are continuously transmitted, alternately for each incoming video signal. If necessary, synchronization pulses are generated in a synchronization unit 105 (SYNC) for the signal to be transmitted. In addition, other information may be added to the signal transmitted.

According to the invention, an identifying information transmission unit 107 in the transmitter sends the identifying information to a second transmission channel 16. The identifying information is sent in connection with every video field transmitted, and there is a unique identifier corresponding to each video signal VIDEO 1 to VIDEO 4. If the video image comprises more than one field, each field has a unique identifier. The second transmission channel 16 may be the same as or other than the first transmission channel used for transmitting the video signal.

In the example illustrated by Fig. 1, the input video signals are in synchronism, wherefore they can be connected directly to the transmission channel. If the input video signals are out of synchronism, the video signals must be synchronized in the transmitter prior to transmission. This can be done e.g. by storing each input signal in memory (not shown), whereafter the video images are read from the memory and sent to the transmission channel in synchronism with each other.

Transmitter switches 101, 102, 103 and 104 and the synchronizing unit can be implemented with conventional components used in video technology. The transmitter control unit and identifier transmission unit can be advantageously realized by a processor or a special logic circuit, or ASIC circuit. Typically, an ASIC circuit gives a higher operating speed than a processor.

In receiver 11 the input analog video signal is converted to digital form by an A/D converter 111. At the same time, the identifier receive unit 120 picks up identifying information from the second transmission channel 16. When a received identifier corresponds to a predetermined identifier, the receive control unit 121 drives switch 112 so that during the next field the digital video signal travels through the switch to memory 113 which stores the digital signal related to the field. If the video image comprises more than one field, the control unit drives switch 112 and memory 113 so that each field related to the video image is stored in the memory 113.

The image stored in memory is read and converted back to analog form by a D/A converter 114. The analog video signal is fed to a video decoder 115 which converts the video signal to R, G and B signals that are taken via amplifiers 116, 117 and 118 to a picture tube 119 serving as a display. A display control unit 122 controls the video signal read from memory, operation of the video decoder and the horizontal and vertical deflection of the picture tube so that the lines and pixels of the video image are correctly positioned on the picture tube. As the memory read is carried out continuously in synchronism with the picture tube deflection, the picture tube displays the received video image. The image stored in memory can be transferred to the display at a field frequency that is the same as or different from that of the received signal. The use of a higher field frequency in the display control reduces flicker in the image.

Also the chrominance subcarrier, which is included in the signal and has a frequency of 4.43 MHz in the PAL system, is stored in the receiver's memory 113. The sampling frequency of the A/D converter 111 must be high enough so that the chrominance subcarrier phase can be later reproduced in the D/A converter 114 with a sufficient accuracy. A phase error would result in a degradation in the colour fidelity. This sets requirements on the speed of the A/D converter 111, memory 113 and the D/A converter 114. However, the A/D converter, switch 112, memory 113, D/A converter 114, video decoder 115, amplifiers 116, 117 and 118, and the picture tube 119 in the receiver can be realized by conventional components used in video technology, taking into account the speed requirements. The receiver control unit 121 and identifier receive unit 120 can be advantageously implemented with a processor or a specially designed ASIC circuit.

Fig. 1 does not separately show possible transmitter and receiver blocks of the transmission channel but they are included in the transmission channel 15. If the video signal is transmitted by radio waves through air the transmission channel includes a modulator, which modulates the carrier wave with the video signal, and the necessary radio frequency transmitter circuits. Similarly, at the receive end the transmission channel includes RF receiver circuits and a demodulator for detecting the video signal in the received signal. Correspondingly, the second transmission channel may include such circuits, too.

The identifying information may be included in the signal, in which case part of the field, which may be e.g. the time reserved for the field return, is used for transferring the unique identifier of the field. Said identifier may be based on
- identification of the image contents, whereby the user of the receiver may choose the image that he/she wants by specifying the identifier of that image to the receiver,
- identification of the receiver, whereby the sender may choose the receiver to which a certain image is transmitted or
- the combination of these two methods.

In the method described above the identifier contains information about the video image or field being transmitted. Another method is to identify the video image or field on the basis of the receive time. Then, both the transmitter and the receiver have timer units 108 and 123 that count time. In order to synchronize the counting of time by said timer units, identifying information is transferred from the transmitter to the receiver, and the identifier receive unit in the receiver receives information about the transmit times of individual video images. Correspondingly, the transmitter control unit 106 transmits the video images at certain moments of time based on the counting of time by the timer unit.

Fig. 2 shows an embodiment of the invention wherein identifying information is transferred from the receiver to the transmitter. In this embodiment, the receiver 11 includes an identifier transmit unit which sends an identifier to the second transmission channel 26 when a new video image is to be stored in the receiver. The identifier receive unit 207 in the transmitter 10 receives the identifier and transfers it to the transmitter control unit 206. The transmitter control unit 206 controls switches 101, 102, 103 and 104 so that the video image or field sent next to the first transmission channel corresponds to the identifying information received by the transmitter. Also in this embodiment the identifying information is specific to each input video signal VIDEO1 to VIDEO4 and possibly to the image fields in them.

The advantage of the embodiment shown in Fig. 2 over that shown in Fig. 1 is that each video image needs to be transferred only once when a receiver requires an image. So, it is possible to transmit more images on the transmission channel, and the receive time of the video image in the receiver becomes more accurate.

Timing information, too, can be used as identifying information sent from a receiver to the transmitter. Then, both the transmitter and the receiver have timer units 208 and 223 and the operation of the system corresponds to the timing-based principle described above in connection with the description of Fig. 1.

In the methods illustrated in Figs. 1 and 2, the identifier is transferred in one direction between the transmitter and the receivers. Naturally it would be possible to apply a method wherein the identifier is transferred in both directions. For example, an identifier could be first transmitted from a receiver to the transmitter, whereafter a second identifier could be transmitted from the transmitter to the receiver in connection with the video image transmitted from the transmitter to the receiver and the video image would be identified in the receiver on the basis of that second identifier.

Fig. 3 shows a transmitter 30 with four RGB signals R1-G1-B1, R2-G2-B2, R3-G3-B3 and R4-G4-B4 as input signals. The transmitter has for each input RGB signal first switches 311-312-313, 321-322-323, 331-332-333 and 341-342-343. Said first switches can be used for selecting either the R, G or B subsignal in the input signals. The subsignal selected for each input signal is further taken to second switches 314, 324, 334 and 344 by means of which one subsignal can be connected to the transmission channel (OUT).

The transmit control unit 351 controls the first switches so that the R, G and B signals are alternately connected to the second switches. The transmit control unit further controls the second switches so that the R, G and B subsignals of each video input are alternately connected to the transmission channel. So the RGB signals are used to form for the transmission channel 3-field sequences which contain one field from each subsignal R, G and B. These 3-field sequences from each video input are sent to the transmission channel in turns. In addition, synchronizing pulses are added to the signal sent to the transmission channel in a synchronizing unit 353 (SYNC).

The identifier transmit unit sends to the transmission channel an identifier specifying which input video image and field is sent to the transmission channel at a given time. In the method illustrated in Fig. 3, the identifier is transferred on the same transmission path as the signal carrying the video image.

The method of Fig. 3 can also be used for transmitting YUV signals. In that case, instead of RGB signals, four YUV signals Y1-U1-V1, Y2-U2-V2, Y3-U3-V3 and Y4-U4-V4 are connected to the transmitter inputs. Otherwise, the operation of the transmitter 30 is the same as in the case of RGB signals.

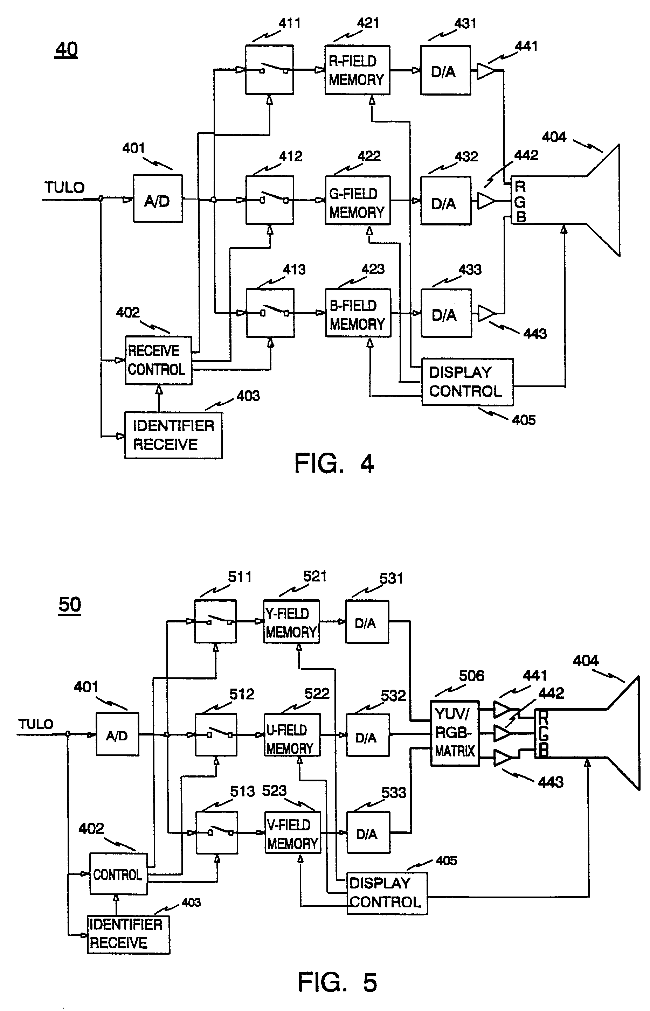

Fig. 4 shows a receiver that receives an RGB signal and can be used in conjunction with the transmitter shown in Fig. 3. A signal (IN) received from the transmission channel is converted to a digital signal in an A/D converter 401 whereafter the digital signal is taken to switches 411, 412 and 413. A receive control unit 402 controls these switches so that the R, G and B field signals received in succession are taken to R, G and B field memory units 421, 422 and 423 where the signals are stored. The memory units shown in the block diagram automatically store the field data in the correct memory locations when the feeding of data is started. Alternatively, the memory units can be controlled by the receive control unit 402 in which case switches 411, 412 and 413 are advantageously included in the memory units.

In the method illustrated by Fig. 4, the identifying information is received from the same channel as the video image. Reception is carried out by the identifier receive unit 403. The receive control unit 402 connects the received video image to memory units only when the identifier receive unit has received a certain predetermined identifier.

The fields are read from the memory units 421, 422 and 423 and the signals are converted to analog form by D/A converters 431, 432 and 433. The analog signals are further amplified by amplifiers 441, 442 and 443 and taken to a picture tube 404 serving as a display. A display control unit 405 controls the video image read from the memory and picture tube deflection so as to produce the received video image on the display screen.

In the RGB system according to Figs. 3 and 4, the speed and memory capacity of the converters and memory used in the receiver can be dimensioned according to the desired resolution. If there is no need for a very high resolution, the total amount of memory can be smaller than in a corresponding system using a video signal. On the other hand, with a large memory and fast converters it is possible to achieve in the RGB system a resolution better than in a system using a video signal.

Fig. 5 shows a receiver for receiving an YUV signal which in other respects corresponds to the system shown Fig. 4. Also in this arrangement the input signal is converted to digital form by an A/D converter 401 and taken to switches 511, 512 and 513. By means of the switches the Y, U and V fields are connected to the corresponding memory units 521, 522 and 523. The image data read from the memory units are converted to analog signals by D/A converters 531, 532 and 533. The analog Y, U and V signals are taken to a YUV/RGB matrix 506 which converts the signals to R, G and B signals for the display. The receive control unit 402, identifier control unit 403 and display control unit 405 operate as in the arrangement illustrated by Fig. 4. The characteristics of a system using a YUV signal are similar with the characteristics of an RGB system.

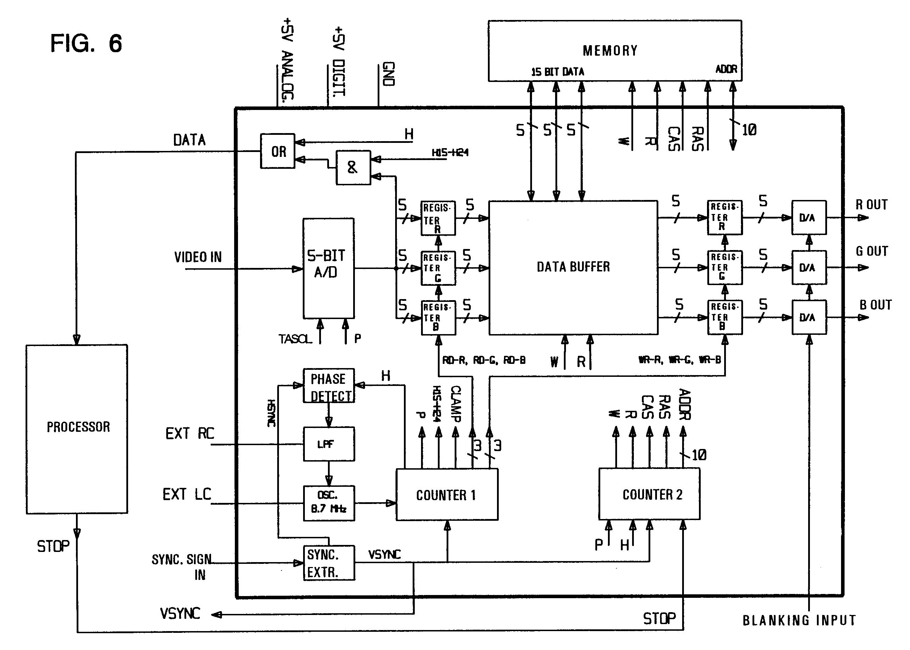

Fig. 6 shows in more detail a circuit arrangement for implementing a receiver for use with an RGB signal. An RGB signal is taken to an A/D converter 610 with a 5-bit resolution the output of which is connected to R, G and B field registers 611, 612 and 613. The digital RGB data is further transferred via a data buffer 614 to memory 601. The RGB signal reception is controlled by means of a synchronizing signal, and a line synchronizing signal HSYNC and a field synchronizing signal VSYNC are extracted from it. An oscillator 625 generates a pixel-frequency clock signal that controls counter 1 (626). The operating frequency range of the oscillator 625 is set by a coil-capacitor circuit (EXT LC). The precise frequency of the clock signal is set by a phase-locked loop, and the phase difference of the line synchronizing signal HSYNC and the line-frequency pulse H calculated from the pixel clock is measured by a phase detector 623. The phase detector controls the oscillator frequency so that the frequency stays correct with respect to the line frequency. The output signal of the phase detector 623 is taken to a low-pass filter 614 (LPF) prior to the oscillator to set the phase lock time constant. The time constant is controlled by a resistor-capacitor circuit (EXT RC) connected to the low-pass filter.

Counter 1 (626) uses the oscillator clock frequency to calculate control pulses for controlling the A/D converter 610 and the registers (611-613, 615-617). A pixel clock signal P is sent to the A/D converter 610 to trigger each A/D conversion. The frequency of the pixel clock signal P is the same as the output frequency of the oscillator 615 and these signals may also be one and the same. In addition, the A/D converter 610 receives a clamping pulse (CLAMP) which gives the A/D converter the time at which the internal reference level of the A/D converter is set for the conversion using the input signal.

A second counter 627 produces control signals to control video image data reading to and from memory. Control signal W (Write) sets the memory to the write state and control signal R (Read) sets the memory to the read state. The video memory is arranged into a table where each address comprises a 16-bit memory. It can store the R, G and B data of a pixel using 5 bits for each of them. In addition, for each pixel there is one bit left for other purposes. The row and column in the memory table is selected using a 10-bit address (ADDR). Signal CAS (Column Address Select) indicates that the input address is directed to a column in the memory table, and signal RAS (Row Address Select) indicates that the input address is directed to a row in the memory table.

The video image data stored in the memory 601 is read into registers 615, 616 and 617. The data transferred into the registers is further converted to analog form by D/A converters 618, 619 and 620 which provide the R, G and B outputs for the display.

It is advantageous to select a memory size such that the memory can store the data of at least two video images. Then the image displayed can be changed without blanking the display. If the memory holds only one image the display must be blanked for the duration of the writing of a new image. If, for example, an image comprises 288 lines and a line comprises 444 displayed pixels, then two images can be stored with a 256 x 1024 x 16 bit memory.

In the arrangement shown in Fig. 6, the identifying information is encoded in some of the blanking lines H15 to H24 of the input RGB signal. The identifier is detected in the receiver using the most significant bit in the A/D converted signal. By means of two gate circuits 621 and 622 the most significant bit is taken to a microprocessor 602 during the blanking lines H15 to H24.

When the microprocessor has recognized the correct identifier it sets the control input STOP to zero. After that, the received video image is transferred to memory 601 starting from the first visible line 24. In practice, the processor 602 needs the duration of one line, or 64 µs to recognize the identifier. Therefore, the identifier has to be sent during line 22 at the latest so that the next field can be transferred to memory. When the processor 602 sets the STOP input to state '1', the transfer of image data to memory ends and the transfer of stored image data to the display begins. The video image stored in the memory is displayed until the data of a new video image are transferred to the memory.

Display control can be blanked by using a blanking input to set the outputs of D/A converters 618, 619 and 620 to a high-impedance state. Blanking can be used e.g. to mix graphics signals in teletext with the image in the memory. Then the RGB output in the teletext circuit is connected in parallel with the outputs of the D/A converters and the outputs of the D/A converters are set to the high-impedance state for the duration of those pixels during which the teletext unit sends graphics information to the display.

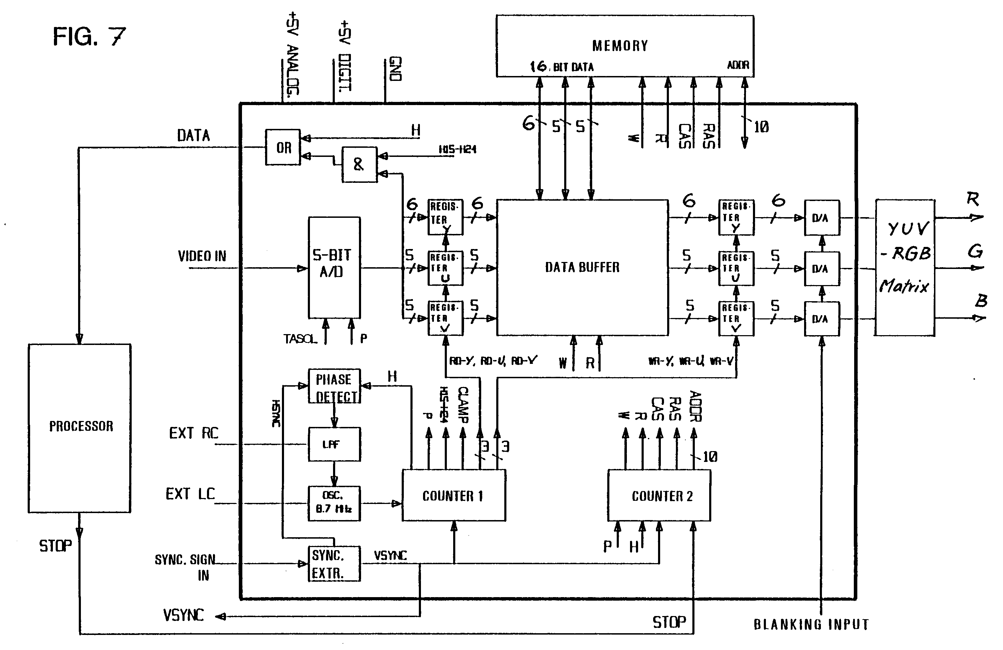

Fig. 7 shows a circuit arrangement for implementing a receiver for use with an YUV signal as a modification of the RGB circuit arrangement described above.
The circuit arrangement can also be modified for video signals according to common video standards, however, such an embodiment is not shown. It is however clear, that the video standard depending solutions are also possible.

Above described embodiments of the method according to the invention can naturally be modified within the scope of the claims as regards e.g. implementation details and fields of use, and by combining the characteristics of the embodiments described.

The transmission path may constitute video-frequency transmission via cable or transfer via cable or air of a RF signal modulated with a video-frequency signal or transfer via optical fibre of an optical signal modulated with a signal mentioned above. Transfer via cable can be advantageously used in closed video networks in buildings such as hotels or airports, for example. Transfer via air can be advantageously used e.g. when transferring still video images via satellites or TV transmitters.

## Claims

1. A method for transferring a video image wherein the video image is transferred substantially as an analog signal from a transmitter (10) to a receiver (11) on a first transmission channel (15) together with identifying information, the video image to be stored in the receiver (11) beeing selected on the basis of said identifying information, **characterized** in that the received video image is converted in the receiver (11) to digital form and stored, and the stored video image is read, converted back to analog and displayed.

2. A method of claim 1, **characterized** in that the identifying information includes information about the video image to be transmitted.

3. A method of any one of the preceding claims, **characterized** in that
- time is counted in the transmitter (10) and receiver (11),
- the image to be stored in the receiver is selected on the basis of the reception time,
- the image to be transmitted is selected on the basis of the transmission time, and
- said identifying information is time information transmitted between the transmitter and receiver to synchronize the time counting in the transmitter and receiver.

4. A method of any one of the preceding claims, **characterized** in that the video image is transferred as a video signal, RGB signal or YUV signal.

5. A method of any one of the preceding claims, **characterized** in that the identifying information is transferred between the transmitter and the receiver via a second transmission channel (16, 26) and that the video image to be stored in the memory (113) is selected on the basis of said identifying information.

6. A system for transferring, storage and display of a video image comprising
- a transmitter (10), a receiver (11) and a first transmission channel (15) wherein a video image is transferred from said transmitter (10) to said receiver (11) substantially in the form of an analog signal via said first transmission channel (15) together with identifying information, and
- means (121, 112) for selecting a video image to be stored in the memory (113) on the basis of said identifying information,
**characterized** in that the video image is converted to digital in a A/D converter (111) for storage in a digital memory (113) under control of a receiver control (121) for storage and read from the memory (113) under control of a display control (122) for display.

7. A system of claim 6, **characterized** in that the video image is transferred in R,G,B form and that the memory (113) is organized to store the video image information as 5-bit data words per colour channel R,G,B.

8. A system of claim 6, **characterized** in that the video image is transferred in Y,U,V form and that the memory (113) is organized to store the video image information as 6-bit data word for Y and 5-bit data words for U and V.

9. A system of any one of claims 6 to 8, **characterized** in that
- the transmitter (10) has means (108) for counting time,
- the receiver (11) has means (123) for counting time,
- the transmitter and receiver have means (107, 120, 207, 220) for transferring time information in the form of said identifying information between the transmitter and receiver to synchronize the time counting of the transmitter and receiver.
